# EUROPEAN PATENT APPLICATION

(11) **EP 4 343 474 A1**
(43) Date of publication of application: **27.03.2024**
(21) Application number: 21947418.6
(22) Date of filing: 28.06.2021
(51) Int. Cl.: G05B 23/02, B60K 35/00, B60R 16/023

(54) **ONBOARD DISPLAY CONTROL METHOD AND APPARATUS, ONBOARD DISPLAY SYSTEM, AND VEHICLE**

(71) Applicant: Huawei Technologies Co., Ltd., Shenzhen, Guangdong 518129 (CN)
(72) Inventor: CHEN, Zhikai, Shenzhen, Guangdong 518129 (CN)
(74) Representative: Goddar, Heinz J.
(86) International application number: PCT/CN2021/102863
(87) International publication number: WO 2023/272454

(57) **Abstract**

This application relates to the field of intelligent automobile technologies, and provides an in-vehicle display control method. The method includes: in a first transmission state, for example, when reception of first image data is normal, receiving the first image data, and sending third image data corresponding to the first image data to a display unit; and in a second transmission state, for example, when reception of the first image data is abnormal, obtaining second image data, for example, pre-stored image data corresponding to a vehicle status, and sending fourth image data corresponding to the second image data to the display unit. The first image data and the second image data indicate vehicle status data. In this application, when reception of the first image data is abnormal, the fourth image data may be sent to the display unit, to display vehicle status data. This implements backup display of the vehicle status data, improves reliability of an in-vehicle display system, and further improves vehicle driving safety.

## Description

### TECHNICAL FIELD

The present application relates to the field of intelligent automobiles, and in particular, to an in-vehicle display control method and control apparatus, an in-vehicle display system, a vehicle, a computing device, a chip, a computer-readable storage medium, and a computer program product.

### BACKGROUND

Instrument displays, such as those on automobiles and ships, are necessary components configured to display device status information on motorized transportation means. As intelligentization is deepening, digital instruments are more and more widely used in the motorized transportation means. For intelligent vehicles, digital instruments can display information such as a vehicle status, an occupant status, and a driving environment status, which is usually related to driving safety. Therefore, the intelligent vehicles impose high reliability requirements on the digital instruments. Especially in scenarios with functional safety level requirements, reliability of an in-vehicle display is more emphasized.

However, the in-vehicle display usually uses a single display source. When the display source is faulty, a display apparatus therefor cannot normally perform display. Therefore, users cannot learn of information related to driving safety, and even cannot continue to use a transportation means equipped with the display apparatus.

### SUMMARY

In view of the foregoing problem, this application provides an in-vehicle display control method and control apparatus, an in-vehicle display system, and a vehicle, so that image data corresponding to vehicle status data can be displayed in a plurality of manners. This improves reliability of an in-vehicle display system, and further improves vehicle driving safety.

To achieve the foregoing objective, a first aspect of this application provides an in-vehicle display control method. The method includes: in a first transmission state, receiving first image data, and sending third image data to a display unit; and in a second transmission state, obtaining second image data, and sending fourth image data to the display unit. The second transmission state indicates that reception of the first image data is abnormal. The first image data and the second image data indicate a vehicle status. The third image data and the fourth image data respectively correspond to the first image data and the second image data.

As above, the first transmission state may be a state where reception of the first image data by the in-vehicle display control apparatus is normal, and reception of the first image data by the in-vehicle display control apparatus can be normal. In a possible implementation, data monitoring may be performed on a transmission interface that is configured to receive the first image data, to determine whether the receiving status is normal. In a possible implementation, the first image data may be image data generated by a GPU, and the second image data may be pre-stored image data. When the receiving status is normal, that is, in the first transmission state, the first image data provided by the GPU is received, and the corresponding third image data is displayed by using the display unit. When the receiving status is abnormal (that is, in the second transmission state), for example, data cannot be monitored due to a connection interruption, or monitored data is not refreshed within a specified time period due to data freezing, the pre-stored second image data is read based on the vehicle status data, and the corresponding fourth image data is displayed by using the display unit. This implements backup display of the vehicle status data, improves reliability of an in-vehicle display system, and further improves vehicle driving safety. In addition, in the technical solution of implementing backup display by using multiple channels and different sources, no additional GPU is used. Therefore, implementation costs of the technical solution are relatively low.

In a possible implementation of the first aspect, the obtaining second image data includes: receiving vehicle status data, and generating the second image data based on the vehicle status data, or reading the pre-stored second image data based on the vehicle status information.

As above, the second image data may be generated in real time based on a technical implementation requirement and the vehicle status data. Alternatively, the second image data may be pre-stored, and the corresponding second image data may be read based on the vehicle status data. When the pre-stored second image data is read, the second image data may be pre-stored, and rendering and generation of the second image data do not need to be performed in real time. Therefore, no additional GPU needs to be added in a process of generating the second image data, and implementation costs are relatively low.

In a possible implementation of the first aspect, different vehicle status data corresponds to different storage addresses, and different second image data is pre-stored in the different storage addresses. The reading the pre-stored second image data specifically includes: reading the second image data in the storage address corresponding to the vehicle status data.

As above, reading the pre-stored second image data corresponding to the vehicle status data may be implemented through cooperation between an MCU and a memory, and no GPU needs to be added. Therefore, implementation costs are relatively low.

In a possible implementation of the first aspect, the vehicle status includes one or more of a vehicle-mounted device running status, a vehicle occupant status, a vehicle driving status, and a driving environment status.

As above, multiple types of vehicle status data may be obtained based on a requirement, and corresponding information is displayed on the display unit. The vehicle-mounted device running status includes, for example, a battery level status, an engine oil level status, an EPS system status, and an ABS system status. The vehicle occupant status includes, for example, a driver's attention status (for example, whether the driver is drowsy, and whether a gaze direction is forward), a passenger status, and an occupant's physiological status (for example, a heart rate, a blood pressure, or a body temperature). The vehicle driving-related status includes, for example, a vehicle speed, an engine rotational speed, a motor rotational speed, a transmission gear, an in-vehicle temperature, a tire pressure, and an autonomous driving state. The driving environment status includes, for example, a traffic congestion status, a weather condition (for example, a temperature, humidity, rain, or snow), and a road type (for example, a high-speed road or an urban road).

In a possible implementation of the first aspect, the vehicle status data is received by using one or more of a controller area network CAN, a local interconnect network LIN, a FlexRay, a media oriented system transport MOST, or an automotive Ethernet.

As above, the vehicle status data may be transmitted based on a requirement of the device by using a bus as a signal channel.

A second aspect of this application provides an in-vehicle display control apparatus. The apparatus includes: a first processing module, configured to: in a first transmission state, receive first image data, and send third image data to a display unit; and a second processing module, configured to: in a second transmission state, obtain second image data, and send fourth image data to the display unit. The second transmission state indicates that reception of the first image data is abnormal. The first image data and the second image data indicate a vehicle status. The third image data and the fourth image data respectively correspond to the first image data and the second image data.

In a possible implementation of the second aspect, when the second processing module is configured to obtain the second image data, the second processing module is specifically configured to: receive vehicle status data, and generate the second image data based on the vehicle status data, or read the pre-stored second image data based on the vehicle status data.

In a possible implementation of the second aspect, the apparatus further includes a storage module. Different vehicle status data corresponds to different storage addresses of the storage module, and different second image data is pre-stored in the different storage addresses. When the second processing module is configured to read the pre-stored second image data, the second processing module is specifically configured to read the second image data in the storage address of the storage module corresponding to the vehicle status data.

In a possible implementation of the second aspect, the vehicle status includes one or more of a vehicle-mounted device running status, a vehicle occupant status, a vehicle driving status, and a driving environment status.

In a possible implementation of the second aspect, the apparatus further includes one or more bus data interfaces of a controller area network CAN, a local interconnect network LIN, a FlexRay, a media oriented system transport MOST, and an automotive Ethernet bus that are configured to receive the vehicle status data.

A third aspect of this application provides an in-vehicle display system, including the in-vehicle display control apparatus according to any implementation of the second aspect, and a display unit.

A fourth aspect of this application provides a vehicle, including the in-vehicle display system provided in the third aspect, and an image generation unit. The image generation unit is configured to generate first image data.

A fifth aspect of this application provides a computing device, including a processor and a memory. The memory stores program instructions, and when the program instructions are executed by the processor, the in-vehicle display control method according to any implementation of the first aspect is performed.

A sixth aspect of this application provides a chip. The chip includes a processor and a data interface. The processor reads, by using the data interface, program instructions stored in a memory, to perform the in-vehicle display control method according to any implementation of the first aspect.

In a possible implementation of the sixth aspect, the memory is integrated into the chip.

In a possible implementation of the sixth aspect, the data interface includes one or more bus data interfaces of a controller area network CAN, a local interconnect network LIN, a FlexRay, a media oriented system transport MOST, and an automotive Ethernet bus.

A seventh aspect of this application provides a computer-readable storage medium. The computer-readable storage medium stores program instructions, and when the program instructions are executed by a computer, the computer is enabled to perform the in-vehicle display control method according to any implementation of the first aspect.

An eighth aspect of this application provides a computer program product, including program instructions. When the program instructions are executed by a computer, the computer is enabled to perform the in-vehicle display control method according to any implementation of the first aspect.

In conclusion, according to the in-vehicle display control method and control apparatus, the in-vehicle display system, the vehicle, the computing device, the chip, the computer-readable storage medium, and the computer program product provided in this application, in the first transmission state (namely, the state where reception of the first image data by the in-vehicle display control apparatus is normal), the in-vehicle display control apparatus may normally receive the first image data, and display the corresponding third image data by using the display unit. In the second transmission state (namely, the state where reception of the first image data by the in-vehicle display control apparatus is abnormal), the in-vehicle display control apparatus may read the pre-stored second image data based on the vehicle status data, and display the corresponding fourth image data by using the display unit. Based on this, the vehicle status data are displayed in two manners. This improves redundancy and reliability of displaying the vehicle status data.

### BRIEF DESCRIPTION OF DRAWINGS

FIG. 1A is a schematic diagram of a vehicle including a display unit according to an embodiment of this application;
FIG. 1B is a schematic diagram of an image displayed by the display unit in FIG. 1A;
FIG. 2 is a schematic flowchart of an in-vehicle display control method according to an embodiment of this application;
FIG. 3 is a schematic diagram of applying an in-vehicle display control apparatus to a vehicle according to a specific implementation of this application;
FIG. 4 is a schematic flowchart of an in-vehicle display control method according to a specific implementation of this application;
FIG. 5 is a schematic diagram of an in-vehicle display control principle according to a specific implementation of this application;
FIG. 6 is a schematic diagram of an in-vehicle display control apparatus according to an embodiment of this application;
FIG. 7 is a schematic diagram of an in-vehicle display system according to an embodiment of this application;
FIG. 8 is a schematic diagram of a vehicle according to an embodiment of this application;
FIG. 9 is a schematic diagram of a chip according to an embodiment of this application; and
FIG. 10 is a schematic diagram of a computer device according to an embodiment of this application.

It should be understood that, in the foregoing schematic structural diagrams, sizes and forms of block diagrams are for reference only, and should not constitute exclusive interpretations to embodiments of the present application. A relative location and an inclusion relationship between the block diagrams shown in the schematic structural diagrams only schematically represent a structural association between the block diagrams, rather than limiting a physical connection mode in embodiments of the present application.

### DESCRIPTION OF EMBODIMENTS

The following further describes the technical solutions provided in this application with reference to the accompanying drawings and embodiments. It should be understood that system architectures and service scenarios in embodiments of this application are mainly intended to describe possible implementations of the technical solutions of this application, and should not be construed as a unique limitation on the technical solutions of this application. A person of ordinary skill in the art may learn that the technical solutions provided in this application are also applicable to a similar technical problem as a system structure evolves and a new service scenario emerges.

It should be understood that the in-vehicle information display solutions provided in embodiments of this application include an in-vehicle display control method and control apparatus, an in-vehicle display system, a vehicle, a computing device, a chip, a computer-readable storage medium, and a computer program product. Because problem-resolving principles of the technical solutions are the same or similar, in the following descriptions of specific embodiments, some repeated parts may not be described again, but it should be considered that the specific embodiments are mutually referenced and may be combined with each other.

The in-vehicle information display solutions can use a mechanical instrument, a digital instrument, or a combination thereof for display. One embodiment may be as follows: For the mechanical instrument part, a micro control unit (Micro Control Unit, MCU), also referred to as a single-chip microcomputer or a microcomputer, obtains vehicle status data for determining, and drives a mechanical instrument panel to display information by using a general-purpose input/output port (General-Purpose Input/Output Port, GPIO). For the digital instrument part, a graphics processing unit (Graphics Processing Unit, GPU) generates image data based on obtained vehicle status data. The image data is received and processed by a digital display, and is then displayed on the digital display. For the mechanical instrument part in the technical solutions, when an MCU is faulty, the mechanical instrument cannot work. For the digital instrument part, when the GPU is faulty, no image data is output. As a result, the digital display cannot normally display, and a user cannot learn of the vehicle status data, for example, information related to driving safety. In addition, the combination of the mechanical and digital instruments also leads to higher costs.

The in-vehicle information display solutions may further be pure digital display solutions. In one embodiment, a GPU may generate image data based on obtained vehicle status data, and the image data is processed by an information processing unit of a digital display and is then displayed by driving a display panel. In this technical solution, when the GPU is faulty, there is no image data. As a result, the digital display cannot normally display, and a user cannot learn of information related to driving safety. This may cause a vehicle driving safety risk.

An embodiment of this application provides an improved in-vehicle information display solution, which uses a technical solution based on digital display. In this embodiment of this application, when an in-vehicle display control apparatus can receive first image data that indicates a vehicle status, the in-vehicle display control apparatus may send third image data corresponding to the first image data to a display unit for display. When reception of the first image data is abnormal, the in-vehicle display control apparatus may obtain second image data that indicates the vehicle status, and send fourth image data corresponding to the second image data to the display unit for display. In some embodiments, the first image data may be image data generated by a GPU, and the second image data may be pre-stored image data. Therefore, when the GPU is faulty, the second image corresponding to vehicle status data is read, and the fourth image data corresponding to the second image data is displayed by the display unit, so that a user can continue to learn of the vehicle status data or information related to driving safety. The user herein is usually a driver, and the user may alternatively be a front passenger, a rear passenger, or the like. The following describes in detail this application.

First, an application scenario of embodiments of this application is briefly described. The application scenario of embodiments of this application may be a vehicle. The vehicle in embodiments of this application includes a general motor vehicle, for example, a land transport apparatus including a car, a sport utility vehicle (sport utility vehicle, SUV), an MPV (multipurpose vehicle, MPV), a bus, a truck, and another cargo or passenger vehicle, various water transport means including a ship and a boat, and an aircraft. The motor vehicle further includes a hybrid vehicle, an electric vehicle, a fuel vehicle, a plug-in hybrid vehicle, a fuel cell vehicle, and another alternative fuel vehicle. The hybrid vehicle is a vehicle having two or more power sources. The electric vehicle includes a pure electric vehicle, a programmable electric vehicle, and the like. This is not specifically limited in this application.

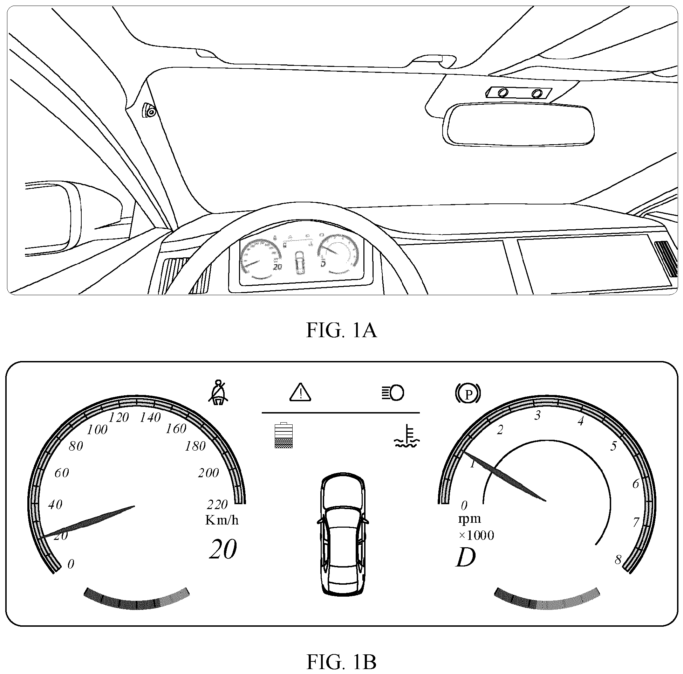

When an embodiment is applied to a digital instrument of the vehicle, content displayed by a display unit may be images of various status data of the vehicle. Specifically, FIG. 1A shows an example. A vehicle has an image processing unit, an in-vehicle display control apparatus, and a display unit. The display unit shown in FIG. 1A is disposed behind a steering wheel. In a specific implementation process, a mounting position of the display unit may be set based on a requirement. For example, the display unit may be disposed in a rear area of the steering wheel as shown in FIG. 1A, or may be disposed in a position like a center console or a nearby area. FIG. 1B is an enlarged view of the display unit. Images indicating different vehicle statuses are displayed in the middle of FIG. 1B, for example, whether a seat belt is buckled, whether a warning light is turned on, whether a high beam is turned on, whether parking brake is enabled, a battery level status, a temperature status of a coolant, and an open/closed state of each door of the vehicle. It is not difficult to understand that the images may further include another image indicate a vehicle status, for example, whether a vehicle electronic stability program (Electronic Stability Program, ESP) is abnormal, whether an anti-lock braking system (Anti-lock Braking System, ABS) is normal, and a charging interface status. In addition, a speedometer and a tachometer can also use a digital dashboard. The images displayed by the display unit in the example shown in FIG. 1B are some images indicating the vehicle statuses, and another related image may be displayed based on needs. In addition, the images displayed by the display unit may correspond to the third image data or the fourth image data.

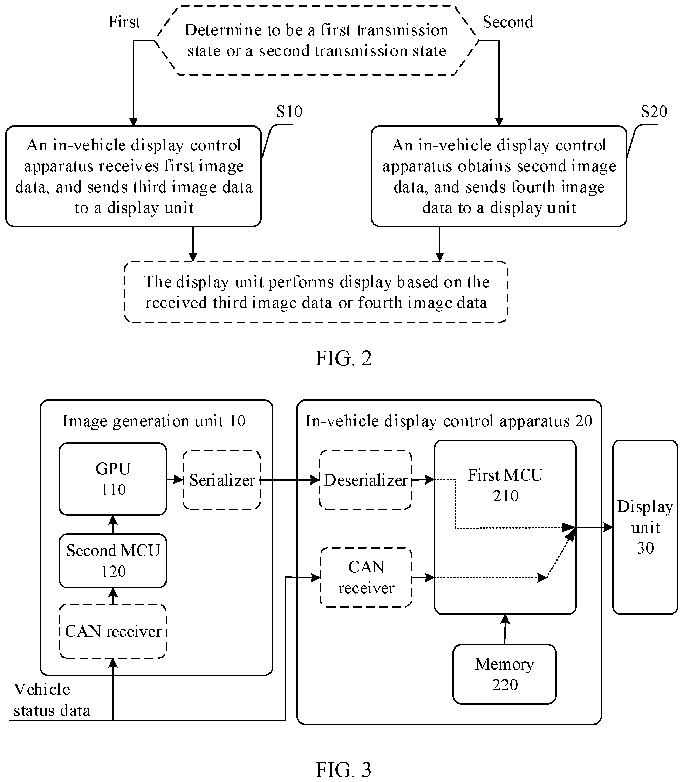

FIG. 2 is a schematic flowchart of a first embodiment of an in-vehicle display control method according to this application. The in-vehicle display control method in this embodiment includes the following steps.

S 10: In a first transmission state, an in-vehicle display control apparatus receives first image data, and sends third image data to a display unit, where the first image data indicates a vehicle status, and the third image data corresponds to the first image data.

In some embodiments, the first transmission state may be a state where reception of the first image data by the in-vehicle display control apparatus is normal. In this state, the in-vehicle display control apparatus can normally receive the first image data. In some embodiments, data monitoring may be performed on a transmission interface that is configured to receive the first image data, to determine whether the receiving status is normal.

In some embodiments, vehicle status data indicated by the first image data includes one or more of the following vehicle statuses: a vehicle-mounted device running status, a vehicle occupant status, a vehicle driving status, a driving environment status, and the like. The vehicle-mounted device running status may include, for example, a battery level status, an engine oil level status, whether an ESP is normal, whether a seat belt is buckled, and whether an ABS is normal. The vehicle occupant status may include, for example, an attention status (for example, whether a driver is drowsy, and whether a gaze direction is forward), a physiological status (for example, a heart rate, a blood pressure, or a body temperature). The vehicle driving status may include, for example, a vehicle speed, an engine rotational speed, a motor rotational speed, a transmission gear, an in-vehicle temperature, a tire pressure, and an autonomous driving state. The driving environment status includes, for example, a traffic congestion status, a weather condition (for example, a temperature, humidity, rain, or snow), a road type (for example, a high-speed road or an urban road), and map information (for example, a common navigation map and a high-precision map).

The vehicle-mounted device running status data, vehicle occupant status data, vehicle driving status data, vehicle driving environment status data, and the like may be obtained by an electronic control unit (electronic control unit, ECU) of a vehicle, or another vehicle-mounted sensor device and communication device, and may be provided to the in-vehicle display control apparatus by using a vehicle bus for corresponding display. In some embodiments, the vehicle-mounted device running status data, the vehicle driving status data, and the like may be obtained by a control unit of the vehicle by using a corresponding sensor, or may be obtained through detection by using a detection program. For example, a battery level is obtained by using a battery level sensor, an engine oil level is obtained by using a liquid level sensor, an ESP system status is obtained by using an ESP self-diagnostic program, whether a seat belt is buckled is obtained by using a detection circuit at a buckle of the seat belt, a vehicle speed is obtained by using a speed sensor, an engine rotational speed or a motor rotational speed is obtained by using a rotational speed sensor, a gear status is obtained by using a transmission gear detection circuit, an in-vehicle temperature is obtained by using a temperature sensor, a tire pressure status is obtained by using a pressure sensor, and a current autonomous driving state is obtained by using autonomous driving set by the driver. The vehicle occupant includes the driver and a passenger. For example, a heart rate and a body temperature of the driver may be obtained by using a heart rate sensor and a body temperature sensor that are disposed on a steering wheel or the seat belt, a sitting posture of the occupant is obtained by using a pressure sensor distributed on a seat and a seat backrest, and an occupant image is obtained by using a camera (like a common RGB (Red Green Blue) camera, an infrared camera, or a binocular camera), and then status data of the occupant is obtained through analysis, such as an attention status, a sitting posture, and mood of the occupant. The driving environment status data may be obtained by using a vehicle-mounted sensor device and a vehicle-mounted communication apparatus, for example, by using a telematics box (telematics box, T-box), a GNSS module, a GPS module, a vehicle-mounted lidar, a millimeter-wave radar, and a camera. The driving environment status data includes vehicle location information, road condition information, map information (including high-precision map information), road type information (such as a high-speed road or an urban road), and weather condition information.

In some embodiments, the first image data may be from data processed by an image processing unit. For example, the image processing unit may process, into the first image data, vehicle status data received by the image processing unit from the vehicle bus, to transmit the first image data to the in-vehicle display control apparatus.

In some embodiments, the in-vehicle display control apparatus may process the first image data to obtain the third image data, and then send the third image data to the display unit. In this case, the third image data is different from the first image data. In some other embodiments, the in-vehicle display control apparatus may forward the received first image data to the display unit without processing the first data. In this case, the third image data is the same as the first image data.

S20: In a second transmission state, an in-vehicle display control apparatus obtains second image data, and sends fourth image data to a display unit, where the second transmission state indicates that reception of the first image data is abnormal, the second image data also indicates a vehicle status, and the fourth image data corresponds to the second image data.

For how to determine whether reception of the first image data is abnormal, refer to the related descriptions in step S10. For example, if data cannot be monitored due to a connection interruption, or monitored data is not refreshed within a specified time period due to data freezing, it indicates that the receiving status is abnormal.

In some embodiments, the second image data may be the vehicle status data from the vehicle bus. The in-vehicle display control apparatus may process the vehicle status data to generate the second image data, and then send the second image data to the display unit. In some other embodiments, the in-vehicle display control apparatus may read, based on the vehicle status data, the pre-stored second image data in the memory address corresponding to the vehicle status.

In some embodiments, different vehicle status data corresponds to different storage addresses of a memory, and different second image data is pre-stored in the different storage addresses. A memory may be integrated into the in-vehicle display control apparatus, or may be disposed outside the in-vehicle display control apparatus.

In some embodiments, the first image data is received by the in-vehicle display control apparatus, or the vehicle status data is received through one or more of a controller area network (Controller Area Network, CAN), a local interconnect network (Local Interconnect Network, LIN), a FlexRay, a media oriented system transport (Media Oriented System Transport, MOST), and an automotive Ethernet.

In addition, before the foregoing steps S10 and S20, the method may further include a step of determining, by the in-vehicle display control apparatus, to be the first transmission state or the second transmission state. Optionally, the first transmission state or the second transmission state may be determined by determining the receiving status of the first image data. For how to determine the receiving status of the first image data, refer to the related descriptions in step S10. Details are not described again.

In addition, after the foregoing steps S10 and S20, the method may further include: The display unit performs display based on the received third image data or fourth image data.

The following further describes this embodiment of the in-vehicle display control method in this application with reference to a specific implementation. FIG. 3 is a schematic diagram of applying an in-vehicle display control apparatus to a vehicle according to a specific implementation of this application. The vehicle includes an image generation unit 10, an in-vehicle display control apparatus 20, and a display unit 30. The in-vehicle display control apparatus 20 and the display unit 30 form an in-vehicle display system.

In this specific implementation, the image generation unit 10 includes a second MCU 120 and a GPU 110, and may further include a CAN receiver and a serializer (Display Serial Interface, DSI). The CAN receiver may also be integrated into the second MCU 120 as a data interface. The serializer may also be integrated into the GPU 110 as a data interface. The second MCU 120 is configured to receive, by using the CAN receiver, vehicle status data transmitted by a CAN bus, for example, a seat belt buckling status, whether a warning light is turned on, whether a high beam is turned on, and a parking brake status, and transmit the information to the GPU 110. The GPU 110 is configured to generate first image data based on the vehicle status data transmitted by the second MCU 120, and output the first image data to the in-vehicle display control apparatus 20. The GPU 110 may output the first image data by using the serializer.

In this example, the in-vehicle display control apparatus 20 includes a first MCU 210 and a memory 220, and may further include a deserializer and a CAN receiver. The deserializer and the CAN receiver may also be integrated into the first MCU 210 as data interfaces, and the memory 220 may also be integrated into the first MCU 210.

In this example, the memory 220 is configured to store each image data of vehicle statuses, for example, the foregoing second image data, and store, by using different storage addresses, different image data indicating different vehicle statuses, where the image data is pre-stored. Pre-stored image data that indicates a same state as the first image data generated by the GPU 110 may be the same as corresponding image data in the first image data. For example, a pre-stored enabling image of the parking brake state is the same as an enabling image of the parking brake state generated by the GPU 110.

The first MCU 210 has an image processing capability, and the first MCU 210 receives the first image data output by the GPU 110. The first image data may be input to a data interface of the first MCU 210 by using the deserializer, for example, a low-voltage differential signaling (Low-Voltage Differential Signaling, LVDS) interface. The first MCU 210 monitors a data transmission status of the LVDS interface, and when the data transmission status is normal, that is, in a first transmission state, the first image data from the GPU 110 is received. In this embodiment of this application, the first MCU 210 may not process the first image data, and directly transmit the first image data as third image data to the display unit 30 for display. When the data transmission status is abnormal, that is, in the second transmission state, for example, data cannot be monitored due to a connection interruption, monitored data is not refreshed within a specified time period due to data freezing, and image data transmission is abnormal due to a fault of the GPU 110, the serializer, the deserializer, or the second MCU 120, the first MCU 210 receives, by using the CAN receiver, the vehicle status data transmitted by using the CAN bus, stores the vehicle status data in a register of the first MCU 210, and sequentially reads each value of the register. Then, the first MCU 210 reads, based on each specified register identifier and a memory address corresponding to the stored value, pre-stored image information from a corresponding address of the memory 220, that is, the second image data, and combine images in the second image data based on predetermined positions, to form fourth image data, and then output the fourth image data to the display unit 30 for display.

A transmission channel through which the vehicle status data passes through the GPU 110 and the first MCU 210 to the display unit 30 may be defined as an active display channel. A transmission channel through which the vehicle status data passes through the first MCU 210 and the memory 220 to the display unit 30 may be defined as a standby display channel. As above, a specific implementation is as following: In a normal case, that is, in the first transmission state, the first image data is transmitted to the in-vehicle display control apparatus through the active display channel, and the corresponding third image data is sent to the display unit 30. When the first MCU 210 detects that transmission of the image data through the active display channel is abnormal, that is, in the second transmission state, the first MCU 210 switches to the standby display channel to obtain the corresponding second image data, and sends the corresponding fourth image data to the display unit 30. Further, when the active display channel recovers from the fault, the first MCU 210 may switch back to the active display channel, that is, switch to the first transmission state. This implements backup in-vehicle display by using multiple channels and different sources, so that the vehicle status data and vehicle driving-related information can be continuously displayed. This improves redundancy and reliability of the in-vehicle display system, and further improves vehicle driving safety.

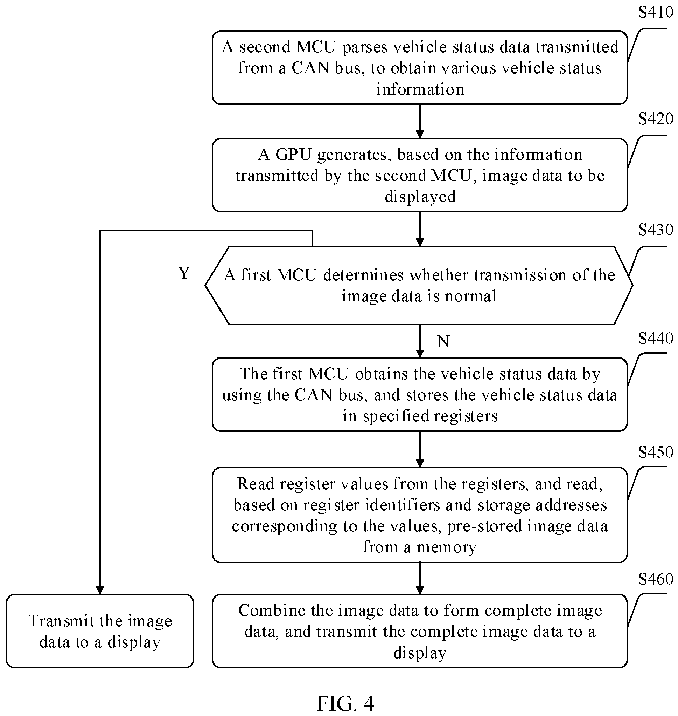

Based on the example in which the in-vehicle display control apparatus is used to the vehicle in the specific implementation, for a specific implementation of a corresponding in-vehicle display control method, refer to a flowchart shown in FIG. 4. The method includes the following steps.

S410: A second MCU 120 of an image generation unit 10 parses vehicle status data transmitted from a CAN bus, to obtain various vehicle status information, for example, a seat belt buckling status, whether a warning light is turned on, whether a high beam is turned on, and a parking brake status, and transfer the information to a GPU 110.

S420: The GPU 110 generates, based on the information transmitted by the second MCU 120, first image data to be displayed, and transmits the generated first image data to an in-vehicle display control apparatus 20.

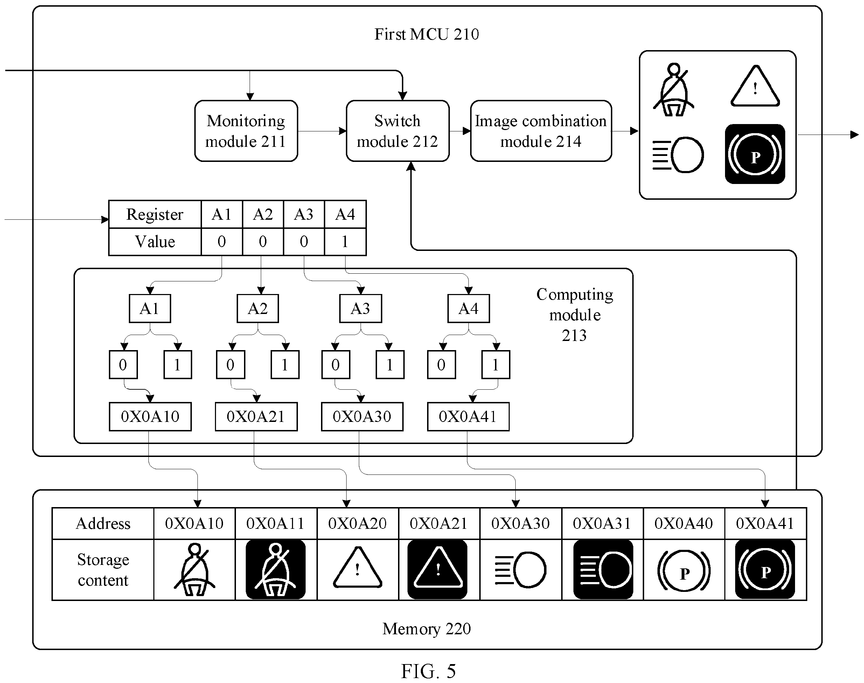

S430: A first MCU 210 of the in-vehicle display control apparatus 20 receives the first image data, that is, receives the first image data by using an active display channel. In addition, as shown in FIG. 5, the in-vehicle display control apparatus 20 monitors an image data transmission interface of the first MCU 210 by using an internal monitoring module 211, to determine whether reception of the first image data is normal. If the data receiving status is normal, that is, in a first transmission state, third image data (the first image data is not processed in this embodiment, and is directly used as the third image data) corresponding to the first image data is transmitted to a display unit 30 by using an internal image combination module 214. If the data receiving status is abnormal, an internal switch module 212 is controlled to switch to a standby display channel, that is, to switch to a second transmission state, and subsequent steps are performed.

S440: The first MCU 210 of the in-vehicle display control apparatus 20 obtains the various vehicle status information by using the CAN bus, and stores the vehicle status information in each specified register.

FIG. 5 is a schematic diagram of implementing switching by the first MCU 210. In this implementation, four registers are defined inside the first MCU 210, and are respectively configured to store the seat belt buckling status, whether the warning light is turned on, whether the high beam is turned on, and the parking brake status. A register A1 is used as an example. The register A1 is defined as storing the seat belt buckling status. The first MCU 210 obtains a value of the seat belt buckling status by using the CAN bus. For example, if a currently obtained value of the seat belt buckling status is 0, the value 0 is stored in the register A1 of the first MCU 210. The value 0 indicates that the seat belt buckling status is abnormal, and a value 1 indicates that the seat belt buckling status is normal. A quantity of registers may be set based on a requirement and a computing capability of the first MCU 210.

S450: The first MCU 210 of the in-vehicle display control apparatus 20 sequentially reads, based on the vehicle status data and by using an internal computing module 213, a register value from each register, and reads, based on a specified register identifier and a storage address corresponding to the value, pre-stored image data from an address of a memory 220, that is, second image data.

For example, when the value of the register A1 is 0, the storage address of the memory 220 to be accessed is 0X0A10, and the first MCU 210 reads stored image data from the address of the memory 220. In this embodiment, the image data is an icon indicating that the seat belt buckling status is abnormal (for example, the seat belt is not buckled). When the value of the register A1 is 1, the storage address of the memory 220 to be accessed is 0X0A11, and the first MCU 210 reads stored image data from the address of the memory 220. In this example, the image data is an icon indicating that the seat belt buckling status is normal. In some embodiments, when the vehicle status is normal, for example, when the seat belt buckling status is normal, the icon may not be displayed. Therefore, in this case, the memory 220 does not need to be accessed, to save storage space of the memory 220.

Similarly, by using this step, values of a register A2, a register A3, and a register A4 may be sequentially read, and corresponding image data is read from the memory 220 based on the values.

S460: The first MCU 210 of the in-vehicle display control apparatus 20 summarizes the image data, that is, the second image data, into the internal image combination module 214, and the image combination module 214 combines the image data to form complete image data, that is, the fourth image data, and transmits the complete image data to the display unit 30 for display. During combination, a position of each image in the combined image may be preset, so that each icon position in the combined image may be the same as each icon position in an image generated by the image generation unit 10.

When switching is performed in the foregoing step S430, if the switching process performed in steps S440 to S450 takes a specific time period, the display unit 30 may keep display content before switching in the switching process until switching is completed, so that a user does not perceive the switching process. In some embodiments, the foregoing steps S440 to S450 may alternatively be performed synchronously with S410, to shorten a switching gap.

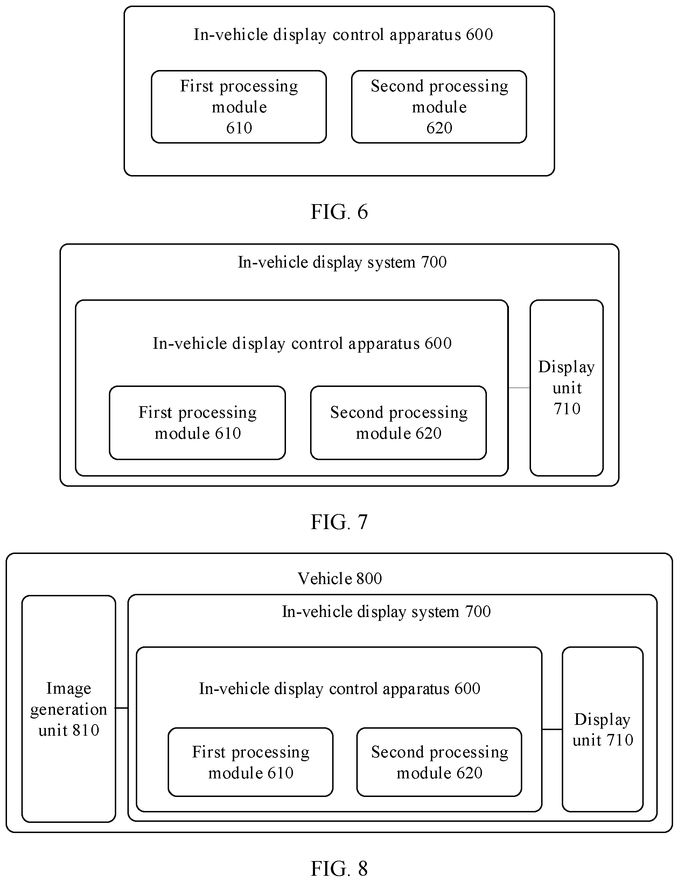

FIG. 6 is a schematic diagram of a structure of a first embodiment of an in-vehicle display control apparatus 600 according to this application. A first processing module 610 included in the in-vehicle display control apparatus 600 in this embodiment is specifically configured to perform step S10 and any optional example of step S10. A second processing module 620 is specifically configured to perform step S20 and any optional example of step S20. For details, refer to the detailed description in the method embodiment, and only brief description is provided herein.

The first processing module 610 is configured to: in a first transmission state, receive first image data, and send third image data to a display unit.

The second processing module 620 is configured to: in a second transmission state, obtain second image data, and send fourth image data to the display unit. When the second processing module 620 is configured to obtain the second image data, the second processing module 620 is specifically configured to: receive vehicle status data, and generate the second image data based on the vehicle status data, or read the pre-stored second image data based on the vehicle status data.

The first processing module 610 and the second processing module 620 may be integrated into one chip, for example, integrated into a first MCU, or may be implemented by two independent chips.

In some embodiments, a storage module is further included. Different vehicle status data corresponds to different storage addresses of the storage module, and different second image data is pre-stored in the different storage addresses. A memory may be integrated into the in-vehicle display control apparatus, or may be disposed outside the in-vehicle display control apparatus. In some embodiments, the memory may be a storage chip, like a flash memory (FLASH) or a non-volatile memory (Erasable Programmable Read Only Memory, EPROM).

When the second processing module 620 is configured to read the pre-stored second image data, the second processing module is specifically configured to read the second image data in the storage address of the storage module corresponding to the vehicle status data.

In some embodiments, the vehicle status includes one or more of a vehicle-mounted device running status, a vehicle occupant status, a vehicle driving status, and a driving environment status.

In some embodiments, one or more data interfaces of a CAN, a LIN, a FlexRay, a MOST, and an automotive Ethernet are further included, configured to receive the vehicle status data. These interfaces may be integrated into the in-vehicle display control apparatus, or may be independent data interfaces.

It should be understood that the in-vehicle display control apparatus 600 in an embodiment of this application may be implemented by hardware. For example, the integrated or discrete first processing module 610 and second processing module 620 may be implemented by a processor of a display apparatus (for example, a central control screen) on a vehicle. Alternatively, the in-vehicle display control apparatus 600 may be implemented by a processor and a data interface circuit configured to receive the vehicle status data. Alternatively, the in-vehicle display control apparatus 600 in an embodiment of this application may be implemented by a combination of a processor and a software module.

It should be understood that for processing details of the apparatus or the module in this embodiment of this application, refer to the related descriptions of the embodiments shown in FIG. 1A to FIG. 5 and related extended embodiments. Details are not described again in this embodiment of this application.

In addition, as shown in FIG. 7, an embodiment of this application further provides an in-vehicle display system 700 having the in-vehicle display control apparatus 600. In addition to the in-vehicle display control apparatus 600, the in-vehicle display system 700 further includes a display unit 710. The in-vehicle display system 700 may be located on a dashboard side of a vehicle, or may be a central control screen of the vehicle, or may be a heads-up display (Heads-up display, HUD), an augmented reality heads-up display (Augmented Reality HUD, AR-HUD), or the like of the vehicle.

In addition, as shown in FIG. 8, an embodiment of this application further provides a vehicle 800 having the foregoing in-vehicle display system 700. FIG. 3 is an implementation of the vehicle. In addition to the in-vehicle display system 700, the vehicle further includes an image generation unit 810 configured to generate first image data. As shown in the embodiment shown in FIG. 3, the image generation unit 810 may include a second MCU and a GPU. The in-vehicle display system 700 and the image generation unit 810 may be disposed in a vehicle system in a pre-installation or post-installation manner. The modules may exchange data by using a bus or an interface circuit of the vehicle. Alternatively, with development of wireless technologies, the modules may exchange data in a wireless communication manner, to eliminate inconvenience caused by cabling.

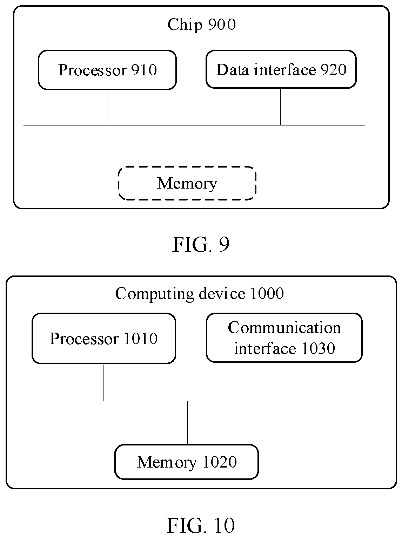

In addition, as shown in FIG. 9, an embodiment of this application further provides a chip 900. The chip 900 includes a processor 910 and a data interface 920. The processor 910 reads, by using the data interface 920, program instructions stored in a memory, to perform the in-vehicle display control method according to any one of the foregoing implementations. In some embodiments, the foregoing memory is integrated into the chip 900, or a memory independent of the chip 900 is disposed. In some embodiments, the data interface 920 includes one or more data interfaces of a controller area network CAN, a local interconnect network LIN, a FlexRay, a media oriented system transport MOST, and an automotive Ethernet.

FIG. 10 is a schematic diagram of a structure of a computing device 1000 according to an embodiment of this application. The computing device may be used as an in-vehicle display control apparatus, to perform the optional embodiments of the foregoing in-vehicle display control methods. The computing device may be a terminal, or may be a chip or a chip system inside the terminal. As shown in FIG. 10, the computing device 1000 includes a processor 1010, a memory 1020, and a communication interface 1030.

It should be understood that the communication interface 1030 in the computing device 1000 shown in FIG. 10 may be configured to communicate with another device, and may specifically include one or more transceiver circuits or interface circuits.

The processor 1010 may be connected to the memory 1020. The memory 1020 may be configured to store program code and data. Therefore, the memory 1020 may be an internal storage module of the processor 1010, may be an external storage module independent of the processor 1010, or may be a component that includes an internal storage module of the processor 1010 and an external storage module independent of the processor 1010.

The computing device 1000 may further include a bus. The memory 1020 and the communication interface 1030 may be connected to the processor 1010 through the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one line is used to represent the bus in FIG. 10, but this does not indicate that there is only one bus or only one type of bus.

It should be understood that, in an embodiment of this application, the processor 1010 may be a central processing module (central processing unit, CPU). The processor may be alternatively another general-purpose processor, a digital signal processor (digital signal processor, DSP), an application-specific integrated circuit (application-specific integrated circuit, ASIC), a field programmable gate array (field programmable gate Array, FPGA) or another programmable logic device, a discrete gate or transistor logic device, or a discrete hardware component. The general-purpose processor may be a microprocessor, or any conventional processor. Alternatively, the processor 1010 uses one or more integrated circuits, and is configured to execute a related program, to implement a technical solution provided in an embodiment of this application.

The memory 1020 may include a read-only memory and a random access memory and provide instructions and data to the processor 1010. A part of the processor 1010 may further include a non-volatile random access memory. For example, the processor 1010 may further store device type information.

When the computing device 1000 runs, the processor 1010 executes the computer executable instructions in the memory 1020 to perform any operation step and any optional embodiment of the foregoing in-vehicle display control methods.

It should be understood that the computing device 1000 according to this embodiment of this application may correspond to a corresponding execution body of the method according to embodiments of this application, and the foregoing and other operations and/or functions of modules in the computing device 1000 are separately intended to implement corresponding procedures of the methods in embodiments. For brevity, details are not described herein again.

A person of ordinary skill in the art may be aware that, in combination with the examples described in embodiments disclosed in this specification, units and algorithm steps may be implemented by electronic hardware or a combination of computer software and electronic hardware. How these functions are implemented depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is only an example. For example, division into the units is only logical function division and may be other division in actual implementation. For example, a plurality of units or components may be combined or integrated into another system, or some features may be ignored or not performed.

An embodiment of this application further provides a computer-readable storage medium. The computer-readable storage medium stores a computer program. When the program is executed by a processor, the program is used to perform any in-vehicle display control method in the specific implementations of this application. The foregoing storage medium includes any medium that can store program code, like a USB flash drive, a removable hard disk, a read-only memory (Read-Only Memory, ROM), a random access memory (Random Access Memory, RAM), a magnetic disk, or an optical disc.

In this specification and claims, the terms "first, second, third, and the like" or similar terms such as a module A, a module B, and a module C are only used to distinguish between similar objects, and do not represent a specific order of the objects. It may be understood that specific orders or sequences may be exchanged if permitted, so that embodiments of this application described herein can be implemented in an order other than an order illustrated or described herein. In the foregoing description, involved reference numerals such as S410 and S420 that indicate steps do not necessarily indicate that the steps are performed based on the order, and may further include an intermediate step or may be replaced with another step, and consecutive steps may be transposed if allowed, or may be performed simultaneously.

"One embodiment" or "an embodiment" mentioned in this specification indicates that a particular feature, structure or property that is described with reference to the embodiment is included in at least one embodiment of this application. Therefore, the terms "in one embodiment" or "in an embodiment" that appear in this specification do not necessarily indicate a same embodiment, but may indicate a same embodiment. In addition, in embodiments of this application, if there are no special statements and logic conflicts, terms and/or descriptions between different embodiments are consistent and may be mutually referenced, and technical features in different embodiments may be combined based on an internal logical relationship thereof, to form a new embodiment.

The foregoing are merely example embodiments of this application and used technical principles. It may be understood that the present application is not limited to specific embodiments described herein, and a person skilled in the art may make various obvious changes, readjustments, and replacements without departing from the protection scope of the present application. Therefore, more other equivalent embodiments may be included without departing from the concept of the present application, and all fall within the protection scope of the present application.

## Claims

1. An in-vehicle display control method, wherein the method comprises:
in a first transmission state, receiving first image data, and sending third image data to a display unit; and
in a second transmission state, obtaining second image data, and sending fourth image data to the display unit, wherein
the second transmission state indicates that reception of the first image data is abnormal; and
the first image data and the second image data indicate a vehicle status, and the third image data and the fourth image data respectively correspond to the first image data and the second image data.

2. The method according to claim 1, wherein the obtaining second image data comprises:
receiving vehicle status data, and generating the second image data based on the vehicle status data, or reading the pre-stored second image data based on the vehicle status data.

3. The method according to claim 2, wherein different vehicle status data corresponds to different storage addresses, and different second image data is pre-stored in the different storage addresses; and
the reading the pre-stored second image data specifically comprises: reading the second image data in the storage address corresponding to the vehicle status data.

4. The method according to claim 2 or 3, wherein the vehicle status comprises one or more of a vehicle-mounted device running status, a vehicle occupant status, a vehicle driving status, and a driving environment status.

5. The method according to any one of claims 2 to 4, wherein the vehicle status data is received through one or more of a controller area network CAN, a local interconnect network LIN, a media oriented system transport MOST, a FlexRay, and an automotive Ethernet bus.

6. An in-vehicle display control apparatus, wherein the apparatus comprises:
a first processing module, configured to: in a first transmission state, receive first image data, and send third image data to a display unit; and
a second processing module, configured to: in a second transmission state, obtain second image data, and send fourth image data to the display unit, wherein
the second transmission state indicates that reception of the first image data is abnormal; and
the first image data and the second image data indicate a vehicle status, and the third image data and the fourth image data respectively correspond to the first image data and the second image data.

7. The apparatus according to claim 6, wherein when the second processing module is configured to obtain the second image data, the second processing module is specifically configured to: receive vehicle status data, and generate the second image data based on the vehicle status data, or read the pre-stored second image data based on the vehicle status data.

8. The apparatus according to claim 7, further comprising a storage module, wherein different vehicle status data corresponds to different storage addresses of the storage module, and different second image data is pre-stored in the different storage addresses; and
when the second processing module is configured to read the pre-stored second image data, the second processing module is specifically configured to read the second image data in the storage address of the storage module corresponding to the vehicle status data.

9. The apparatus according to claim 7 or 8, wherein the vehicle status comprises one or more of a vehicle-mounted device running status, a vehicle occupant status, a vehicle driving status, and a driving environment status.

10. The apparatus according to any one of claims 7 to 9, further comprising one or more data interfaces of a controller area network CAN, a local interconnect network LIN, a media oriented system transport MOST, a FlexRay, and an automotive Ethernet that are configured to receive the vehicle status data.

11. An in-vehicle display system, comprising:
the in-vehicle display control apparatus according to any one of claims 6 to 10, and
a display unit.

12. A vehicle, comprising:
the in-vehicle display system according to claim 11, and
an image generation unit, wherein the image generation unit is configured to generate the first image data.

13. A computing device, comprising:
a processor; and
a memory, wherein the memory stores program instructions, and when the program instructions are executed by the processor, the in-vehicle display control method according to any one of claims 1 to 5 is performed.

14. A chip, wherein the chip comprises a processor and a data interface, and the processor reads, by using the data interface, program instructions stored in a memory, to perform the in-vehicle display control method according to any one of claims 1 to 5.

15. The chip according to claim 14, wherein the memory is integrated into the chip.

16. The chip according to claim 14 or 15, wherein the data interface comprises one or more data interfaces of a controller area network CAN, a local interconnect network LIN, a media oriented system transport MOST, a FlexRay, and an automotive Ethernet.

17. A computer-readable storage medium, wherein the computer-readable storage medium stores program instructions, and when the program instructions are executed by a computer, the computer is enabled to perform the in-vehicle display control method according to any one of claims 1 to 5.

18. A computer program product, comprising program instructions, wherein when the program instructions are executed by a computer, the computer is enabled to perform the in-vehicle display control method according to any one of claims 1 to 5.
